# EUROPEAN PATENT APPLICATION

(11) **EP 4 797 516 A1**
(43) Date of publication of application: **26.08.2026**
(21) Application number: 25160092.0
(22) Date of filing: 25.02.2025
(51) Int. Cl.: H02M 1/14, H02M 1/15, H02M 1/12

(54) **ACTIVE EMI REDUCTION FOR A POWER ELECTRONIC SYSTEM, E.G. IN AN AIRCRAFT**

(71) Applicant: Airbus S.A.S., 31700 Blagnac (FR)
(72) Inventor: Kapaun, Florian, 82024 Taufkirchen (DE); Steiner, Gerhard, 82024 Taufkirchen (DE)
(74) Representative: OTN Airbus SAS

(57) **Abstract**

An enhanced device (12) and an enhanced method for active EMI reduction in a power electronic system (10), especially of an aircraft (100) have been described. The device (12) is configured to carry out the method comprising the steps:
I) sensing EMI noise and outputting an EMI noise signal (16),
II) generating an EMI reduction signal (20) by inverting the EMI noise signal (16),
III) amplifying the EMI reduction signal (20) and
IV) injecting the amplified EMI reduction signal (20) in the power electronic system (10),
wherein step III) is conducted by means of a half bridge with a first power semiconductor and a second power semiconductor which are driven by the EMI reduction signal (20),
a) wherein the first and second power semiconductors are operated in a linear operation mode, wherein step II) comprises generating an analogue EMI reduction signal (44) for driving the first and second power semiconductors, or
b) wherein, as the first and second power semiconductors, GaN semiconductors (46) are used, wherein step II) comprises generating a digital EMI reduction signal (20) for driving the first and second GaN semiconductors (46).

## Description

The invention relates to an active EMI (Electromagnetic Interference or electromagnetic noise) reduction device for a power electronic system, especially of an aircraft. Further, the invention relates to a power electronic system and an aircraft comprising such an active EMI reduction device. Further, the invention relates to a method for active EMI reduction in a power electronic system, especially of an aircraft.

For technological background, reference is made to the following literatures:
[1] Wikipedia, "Active EMI reduction", retrieved on 03.02.2025 from https://en.wikipedia.org/w/index.php?title=Active_EMI_reduction&oldid=12 15465201
[2] "Active Cancellation of Electromagnetic Emissions of Power Electronic Systems by Injecting Synthesized and Synchronized Signals", A. Bendix, Dissertation, retrieved on 03.02.2025 from https://eldorado.tudortmund.de/bitstream/2003/39212/1/Dissertation_Bendicks.pdf

An object of the invention is to provide an improved reduction of electromagnetic noise for power electronics to be used in aircraft.

For achieving such object, the invention provides an active EMI reduction device according to claim 1. A power electronic system and an aircraft equipped therewith are subject-matters as well as a method for active EMI reduction are subject-matters of the further independent claims.

Advantageous embodiments are subject-matters of the dependent claims.

The invention provides according to a first aspect thereof an active EMI reduction device for a power electronic system. The active EMI reduction device comprises an EMI sensing device for sensing EMI noise and for outputting an EMI noise signal, an EMI reduction signal generator for generating an EMI reduction signal by inverting the EMI noise signal, an amplifier circuit for outputting an amplified EMI reduction signal derived from the EMI reduction signal and an injector circuit for injecting the amplified EMI reduction signal in the power electronic system. The amplifier circuit comprises a half bridge with a first power semiconductor such as a first power switch or a first power transistor (e.g. MOSFET or any other suitable semiconductor technologies) and a second power semiconductor such as a second power switch or a second power transistor (e.g. MOSFET or any other suitable semiconductor technologies). According to a first alternative, the first and second power semiconductors are configured for a linear amplification operation and the EMI reduction signal generator is configured to supply an analogue EMI reduction signal driving the first and second power semiconductors. According to a second alternative, the first and second power semiconductors are GaN power semiconductors (e.g. GaN MOSFETs or other GaN power switches) and the EMI reduction signal generator is configured to supply a digital EMI reduction signal driving the first and second GaN power semiconductors.

In some embodiments, the EMI sensing device comprises a current sensor. In some embodiments, the EMI sensing device is configured to measure a current to be supplied to the power electronic system. In some embodiments, the EMI sensing device is configured to sense Common Mode noise. In some embodiments, the EMI sensing device is configured to sense Differential Mode noise. In some embodiments, the EMI sensing device comprises an analogue filter. In some embodiments, the EMI sensing device is configured to supply a digital EMI noise signal.

In some embodiments, the EMI reduction signal generator comprises a processing unit configured to receive the EMI noise signal and to process the EMI noise signal in order to generate an inverted EMI reduction signal, especially by computing. In some embodiments, the processing unit is one of a FPGA, a microprocessor and a digital signal processor. In some embodiments, the EMI reduction signal generator is configured to receive the digitalized EMI noise signal and converts it into an inverted digital EMI reduction signal.

In some embodiments of the first alternative, the EMI reduction generator is configured to generate the EMI reduction signal in form of a bitstream. In some embodiments of the first alternative, the EMI reduction generator comprises a Digital-Analog-Converter configured to convert the digital EMI reduction signal received by the processing unit into an analogue EMI reduction signal. In some embodiments of the first alternative, the EMI reduction generator comprises an analogue amplification unit configured to adapt the analogue EMI reduction signal for use to drive the first and/or second power semiconductors, respectively. In some embodiments of the first alternative, the analogue amplification unit is one of an operational amplifier and a bipolar amplifier. In some embodiments of the first alternative, the EMI reduction generator comprises a passive filter circuit.

In the embodiments of the first alternative, the first and second power semiconductors can be of any kind suitable for a linear HF operation mode in order to amplify the analogue EMI reduction signal by an amplification factor. Examples of suitable power semiconductors for the first alternative comprise HF transistors, Si-MOSFETs, bipolar transistors, power SiC MOSFETs, SiC power semiconductors, SiC power switches or transistors.

In some embodiments of the second alternative, the EMI reduction generator is configured to supply the EMI reduction signal as a PWM signal. In some embodiments of the second alternative, the EMI reduction generator comprises a driver (circuit) configured to receive the digital EMI reduction signal and to adapt it for directly driving the first and second power semiconductors.

In some embodiments, the injector circuit comprises a current injector.

According to another aspect, the invention provides a power electronic system, especially for an aircraft, comprising an active EMI noise reduction device according to any of the aforementioned embodiments.

According to another aspect, the invention provides an aircraft comprising such a power electronic system or an active EMI reduction device according to any of the of the aforementioned embodiments.

According to another aspect, the invention provides a method for active EMI reduction in a power electronic system, especially of an aircraft, the method comprising the steps:
I) sensing EMI noise and for outputting an EMI noise signal,
II) generating an EMI reduction signal by inverting the EMI noise signal,
III) amplifying the EMI reduction signal and
IV) injecting the amplified EMI reduction signal in the power electronic system, wherein step III) is conducted by means of a half bridge with a first power semiconductor (e.g. a power switch/transistor/MOSFET) and a second power semiconductor (e.g. a power switch/transistor/MOSFET) which are driven by the EMI reduction signal. According to a first alternative of the method the first and second power semiconductors are operated in a linear amplification mode, wherein step II) comprises generating an analogue EMI reduction signal for driving the first and second power semiconductors. According to a second alternative of the method, the first and second power switches are provided as GaN power semiconductors, wherein step II) comprises generating a digital EMI reduction signal for driving the first and second GaN power semiconductors.

In some embodiments of the first alternative, the first and second power semiconductors are provided as Si-MOSFETs or SiC power switches. All further HF transistor technologies allowing an amplification of the analogue EMI reduction signal in a proportional way are possible, such as bipolar transistors.

In some embodiments, step I) comprises sensing a current and determining Common Mode noise or Differential Mode noise. In some embodiments, step IV) comprises current injection.

Some embodiments of the invention relate to a use of high-power amplification for HF (high frequency). Especially, the invention relates to the technical field of power electronics and HF circuits.

In power electronics systems, amplifier circuits with reduced power (<100W) and high frequencies (> 1 MHz) are often required. This is a typical need for injection circuits, such as for electromagnetic interference (EMI) cancelling purposes.

Typically, this is achieved through state-of-the-art amplifier circuits that can operate in frequency ranges above 100 MHz. The amplifiers provide the necessary signal, which is then coupled into the power circuit to be filtered via capacitors. Unfortunately, the output power is limited to only a few watts. This is sufficient to cancel e.g. Common Mode noise (CM-noise) in low-power systems (approximately a few kW), but not for high-power systems in the range of 100 kW and beyond.

Embodiments of the invention suggest two methods to overcome these limitations by employing discrete high-frequency (HF) circuits either in a linear or switched manner. As a result, while the maximum achievable frequency is gradually reduced (approximately 50 MHz), the output power can be maximized.

In some embodiments, two different methods (alternatives) are proposed:
a) Use of Si-MOSFETs in a half bridge configuration, driven by an analogue circuit. The MOSFETs have to be semiconductors, optimized for linear, HF-operation like e.g. IXZH10N50. Besides Si-MOSFET, also SiC devices may be good options as some can also be used in linear mode. All other HF power semiconductors - e.g. bipolar transistors - suitable for a linear HF operation mode can be used.
b) Use of high frequency GaN power semiconductors, driven in switched instead of linear mode.

With embodiments of the invention, it is possible to push an applicable injection current for EMI reduction from some hundreds of mA to 10A and more.

In embodiments of the invention a drastically increase of the output power of an HF-amplification circuit, especially for EMI reduction purposes, can be achieved. This enables it to even cancel CM-noise in high power applications and therefore reduces effort for passive filter circuits which account for the main weight of inverter systems. Thus, the overall weight and volume of high-efficient inverters can be reduced. This has special advantages for use in aircraft.

Embodiments of the invention are explained below referring to the accompanying drawings in which:
- Fig. 1: a simplified circuit of a first embodiment of an active EMI reduction device in a power electronic system, especially for an aircraft;
- Fig. 2: a simplified circuit of a second embodiment of an active EMI reduction device in a power electronic system, especially for an aircraft;
- Fig. 3: a graph showing the output of a processing unit and of a driver of the active EMI reduction device of Fig. 2;
- Fig. 4: a graph showing output signals of different units of the EMI reduction device of Fig. 1, in comparison to the outputs of Fig. 3; and
- Fig. 5: an example for an aircraft with a power electronic system, such as an inverter, equipped with such an active EMI reduction device according to embodiments of the invention.

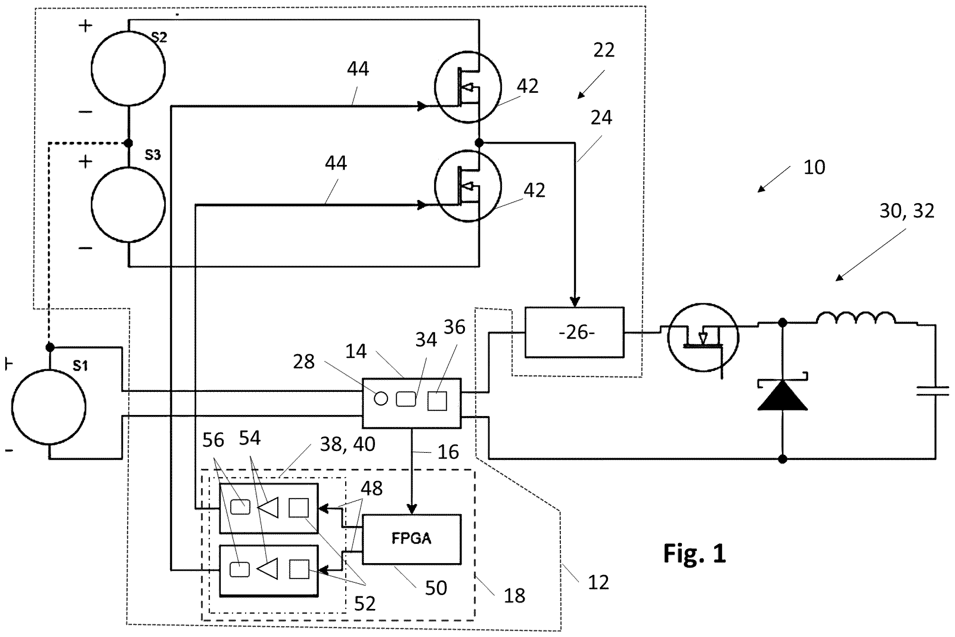

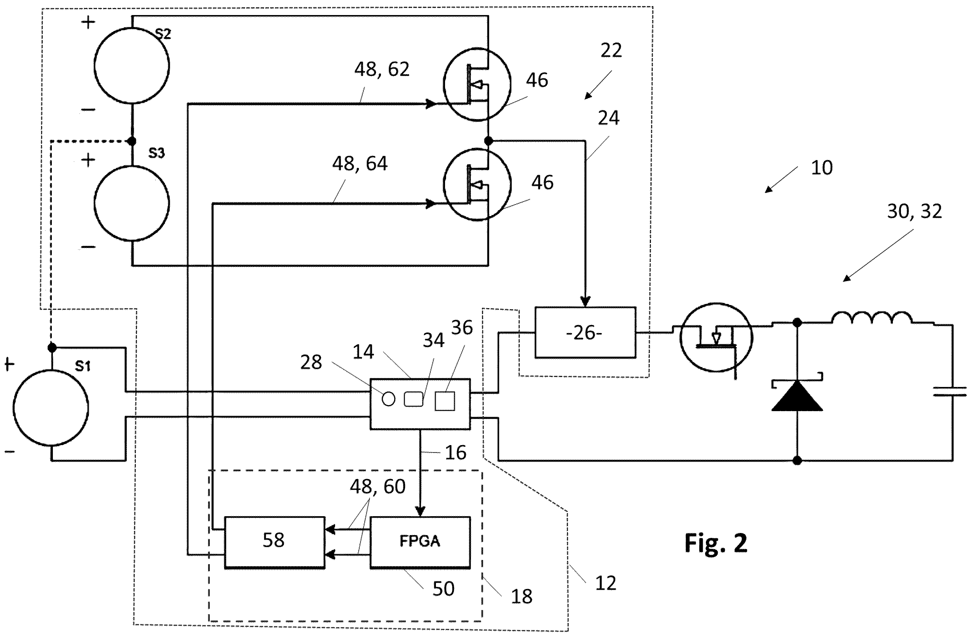

Exemplary (simplified) circuits for an active EMI reduction in power electronics are shown in Figs. 1 and 2. Both aim to push an applicable injection current from some hundreds of mA to 10A and more.

Fig. 1 and 2 both show a simplified power electronic system 10 powered by an electrical energy source S1 and equipped with an active EMI reduction device 12. The active EMI reduction device 12 comprises an EMI sensing device 14 for sensing EMI noise and for outputting an EMI noise signal 16, an EMI reduction signal generator 18 for generating an EMI reduction signal 20 by inverting the EMI noise signal 16, an amplifier circuit 22 for outputting an amplified EMI reduction signal 24 derived from the EMI reduction signal 20, and an injector circuit 26 for injecting the amplified EMI reduction signal 24 in the power electronic system 10.

In the embodiment of Fig. 1, the amplifier circuit 22 comprises Si-MOSFETs 42 in a half-bridge configuration, driven by an analogue driving circuit 40. The semiconductors of the amplifier circuit 22 are optimized for linear, high frequency operation, like e.g. IXZH10N50. Some alternative embodiments (not shown) of the amplifier circuit 22 comprise SiC devices which can be used in linear mode instead of the Si-MOSFETs. Further embodiments (not shown) use other transistor technologies suitable for a linear HF amplification mode.

In the embodiment of Fig. 2, the amplifier circuit 22 comprises GaN power semiconductors 46, driven in switched instead of linear mode.

In principle both solutions show a similar (simplified) circuit. Main difference refers to the operating mode of the different semiconductor technologies. If Si-MOSFETs or the like are used, operation applies in linear mode like a push-pull stage. In this case, the semiconductors are not completely turned on but behave like a controllable resistor. An example circuit is shown in Fig. 1.

In the embodiments as shown in Figs. 1 and 2, the EMI sensing device 14 comprises a current sensor 28 configured to sense a current flowing from the energy source S1 to a power circuit 30, such as a part of an inverter 32. The current sensor 28 is adapted to deliver an output current measuring signal indicative of the EMI to be reduced, e.g. Common Mode noise or Differential Mode noise. In some embodiments, the EMI sensing device 14 comprises a filtering device such as an analogue filter circuit 34 for filtering the current measuring signal. In some embodiments, the EMI sensing device 14 comprises an analogue to digital converter 36. Thus, the EMI sensing device 14 is configured to conduct an EMI sensing step, wherein e.g. current is sensed. For detecting and evaluation of the currents it has to be considered whether Common Mode noise or Differential Mode noise shall be compensated. In a further step, the current measuring signal is filtered and subsequently digitalized. Thus, a digitalized EMI noise signal 16 is provided.

In the embodiments shown, the EMI reduction signal generator comprises a processing unit 50 configured to read the digitalized EMI noise signal 16 and to process it with special algorithms, see e.g. [1] or [2], in order to provide the EMI reduction signal 20. The processing unit 50 may be, e.g. a FPGA, a µC or a DSP, or any other processing unit suitable to provide the desired function.

Referring to Fig. 1, the first embodiment is now explained in more detail.

In the embodiment of Fig. 1, the current is monitored and transmitted to the processing unit 50 such as a FPGA which computes the output signal. For FETs to operate in a linear mode, as shown in an exemplary way in Fig. 1, an analogue voltage must be supplied to the gate-source pins. This is achieved through the analogue driving circuit 40 comprising a high-speed analogue amplification unit 38 with minimal power consumption.

In the embodiment shown, the amplification unit 38 comprises a digital to analogue converter 52, a fast amplifier unit 54, such as an operational amplifier, a bipolar amplifier, ..., and optionally a further (passive) filter circuit 56.

The resulting output voltage - analogue EMI reduction signal 44 - controls two MOSFETs 42, enabling the delivery of higher current levels. The required compensation current (example for the amplified EMI reduction signal 24) is injected via a current injection circuit (example for the injector circuit 26). Possible solutions are e.g. capacitive coupling, direct inductive coupling or use of a transformer. A second electrical energy source S2 and a third electrical energy source S3 function as voltage sources at lower levels, allowing the use of values in the ranges of v<±50 V (referred to the positive supply of the first electrical energy source S1 which is only necessary for direct inductive coupling - dashed line -. For capacitive and transformer coupling, S2 and S3 can be independent of S1).

Referring to Fig. 2, the second embodiment is now explained. The second solution requires a power semiconductor with extremely high switching capabilities. Typically, this falls in the domain of GaN power devices 46, as they can operate in the GHz range. In this circuit, the operation is not linear but involves extremely rapid switching. An example for the circuit is depicted in Fig. 2. The main distinction to the circuit of Fig. 1 lies in the signal chain between the processing unit 50 such as a FPGA and the power semiconductors. Since GaN devices 42 can be directly driven with digital voltages, the output signal from the processing unit 50 (e.g. FPGA) only is adapted via a driver to match the voltage range of the GaN dies 46.

For current measurement and reinjection, the same considerations apply for the second method as for the first method, hence similar devices and units are used in both embodiments for the EMI sensing device 14 and the injector circuit 26.

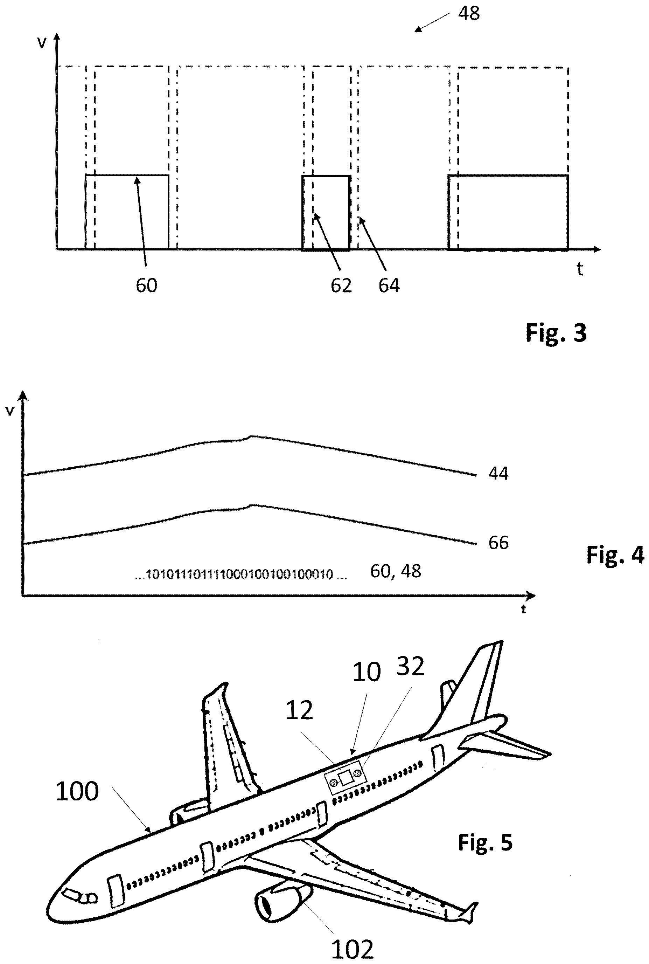

An example for operation of the second embodiment is explained in more detail with reference to Fig. 3. As mentioned before, the current is measured by the EMI sensing device 14, and a digital EMI noise signal 16 is supplied. The processing unit 50 reads the EMI noise signal 16 and computes an inverted digital EMI reduction signal 48. Fig 3 shows, in a voltage-time-diagram simplified to a large extent, the corresponding output 60 of the processing unit 50 (FPGA), the output 62 of the first channel of the driver 58, and the output 64 of the second channel of the driver 58. The first channel directly drives the first GaN device 46, and the second channel directly drives the second GaN device 46. In this digital solution as depicted in Fig. 2 and 3, a PWM signal of the FPGA is directly used as input for the driver 58 which drives the GaN devices 46 with adapted voltage level.

Fig. 4 also shows a simplified voltage-time diagram for the operation of the first embodiment, in comparison with Fig. 3. Fig. 4 shows the output 60 of the FPGA, the output of the digital to analogue converter 52 and the output 68 of the amplifier unit 54.

In the embodiment shown in Fig. 1, the FPGA reads the digitalized EMI noise signal 16 and computes the output signal 60 in form of a bitstream. The analogue amplification unit 38 comprises the DAC (digital to analogue converter 52) configured to convert the computed bitstream signal 60 to an analogue signal 66 and the amplifier unit 54 such as an operational amplifier or a bipolar amplifier configured to adapt the voltage level and the output current of the analogue signal to the requirements for driving the MOSFETs. Further, the analogue amplification unit 42 may comprise a passive filter circuit 56. The corresponding analogue EMI reduction signal 44 is used for driving the MOSFETs 42.

In both embodiments, the output of the half bridge is injected via the current injector circuit into the power circuit 30 as this was explained above.

With the embodiments described, the output power of the HF amplification circuit 22 can be drastically increased so that even CM-noise in high power applications can be cancelled. Therefore, the effort for passive filter circuits can be reduced which reduces the main weight of an inverter system. Thus, the overall weight and volume of high-efficient inverters 32 can be reduced. This has special advantages for inverters intended for use on aircraft.

Fig. 5 shows an example of an aircraft 100 having a power electronic system 10 equipped with the active EMI reduction device 12. Especially, the aircraft comprises the inverter 32 with a high energy output and a high efficiency wherein EMI noise in the inverter 32 is actively reduced or cancelled by way of the active EMI reduction device 12.

The aircraft 100 may be an airplane or a rotorcraft. Especially, the aircraft 100 may have at least one engine 102 which is at least partially electrically driven, wherein electrical power is provided by the power electronic system 10. The power electronic system 10 may also be provided for driving other electric or electronic equipment of the aircraft 100.

While the principles of the invention have been described by way of example with reference to specific embodiments, various variations are possible. For example, instead of an active EMI noise reduction by use of current measuring and current injection, also other EMI noise reduction modes are possible, e.g. using voltage measuring and/or voltage induction. For further possible variations, reference is made to [1] and [2].

An enhanced device (12) and an enhanced method for active EMI reduction in a power electronic system (10), especially of an aircraft (100) have been described. The device (12) is configured to carry out the method comprising the steps:
I) sensing EMI noise and outputting an EMI noise signal (16),
II) generating an EMI reduction signal (20) by inverting the EMI noise signal (16),
III) amplifying the EMI reduction signal (20) and
IV) injecting the amplified EMI reduction signal (20) in the power electronic system (10),
   wherein step III) is conducted by means of a half bridge with a first power semiconductor and a second power semiconductor which are driven by the EMI reduction signal (20),
   a) wherein, as the first and second power semiconductors, Si-MOSFETs (42) or SiC power transistors are used, wherein step II) comprises generating an analogue EMI reduction signal (44) for driving the first and second power semiconductors, or
   b) wherein, as the first and second power semiconductors, GaN semiconductors (46) are used, wherein step II) comprises generating a digital EMI reduction signal (20) for driving the first and second GaN semiconductors (46).

In some embodiments, Si-MOSFETs (42) or SiC power transistors are used as the first and second power semiconductors in alternative a) and are operated in a linear amplification mode wherein the EMI reduction signal (44) is amplified linearly, by a (predetermined, fixed) amplification factor.

### Reference sign list:

- 10: power electronic system
- 12: active EMI reduction device
- 14: EMI sensing device
- 16: EMI noise signal
- 18: EMI reduction signal generator
- 20: EMI reduction signal
- 22: amplifier circuit
- 24: amplified EMI reduction signal
- 26: injector circuit
- 28: current sensor
- 30: power circuit
- 32: inverter
- 34: analogue filter circuit (for filtering EMI noise signal)
- 36: analogue to digital converter
- 38: amplification unit
- 40: analogue driving circuit
- 42: Si-MOSFET
- 44: analogue EMI reduction signal
- 46: GaN power semiconductor
- 48: digital EMI reduction signal
- 50: processing unit
- 52: digital to analogue converter
- 54: amplifier unit
- 56: passive filter circuit (for filtering analogue EMI reduction signal)
- 58: driver
- 60: output FPGA
- 62: output channel 1 of driver
- 64: output channel 2 of driver
- 66: output DAC
- 68: output amplifier unit
- 100: aircraft
- 102: engine
- S1: first electrical energy source
- S2: second electrical energy source
- S3: third electrical energy source

## Claims

1. Active EMI reduction device (12) for a power electronic system (10), the active EMI reduction device (12) comprising:
an EMI sensing device (14) for sensing EMI noise and for outputting an EMI noise signal (16),
an EMI reduction signal generator (18) for generating an EMI reduction signal (20) by inverting the EMI noise signal (16),
an amplifier circuit (22) for outputting an amplified EMI reduction signal (24) derived from the EMI reduction signal (20), and
an injector circuit (26) for injecting the amplified EMI reduction signal (24) in the power electronic system (10),
wherein the amplifier circuit (22) comprises a half bridge with a first power semiconductor and a second power semiconductor, and
a) wherein the first and second power semiconductors are configured for a linear amplification operation and the EMI reduction signal generator (18) is configured to supply an analogue EMI reduction signal (44) driving the first and second power semiconductors, or
b) wherein the first and second power semiconductors are GaN power semiconductors (46) and the EMI reduction signal generator (18) is configured to supply a digital EMI reduction signal (48) driving the first and second GaN power semiconductors.

2. Active EMI reduction device (12) according to claim 1,
wherein the EMI sensing device (14)
2.1 comprises a current sensor (26); and/or
2.2 is configured to measure a current to be supplied to the power electronic system (10); and/or
2.3 is configured to sense Common Mode noise; and/or
2.4 is configured to sense Differential Mode noise; and/or
2.5 comprises an analogue filter (34); and/or
2.6 is configured to supply a digital EMI noise signal (16).

3. Active EMI reduction device (12) according to any of the preceding claims, wherein the EMI reduction signal generator (18)
3.1 comprises a processing unit (50) configured to receive the EMI noise signal (16) and to process the EMI noise signal (16) in order to generate an inverted EMI reduction signal (20); and/or
3.2 comprises a processing unit (50) chosen from the group consisting of a FPGA, a microprocessor and a digital signal processor; and/or
3.3 is configured to receive the digitalized EMI noise signal (16).

4. Active EMI reduction device (12) according to claim 1, alternative a), or any of the claims 2 to 3, dependent from claim 1, alternative a),
wherein the first and second semiconductors are
4.1 chosen from a group consisting of MOSFETs, bipolar transistors, Si-transistors, Si-MOSFETs (42), power Si-MOSFETs, power SiC-MOSFETs, SiC power devices, SiC power transistors; and/or
4.2 are configured to operate in a linear mode wherein the analogue EMI reduction signal is amplified proportionally or by an amplification factor; and/or
4.3 are configured to operate in a linear mode for high frequencies in a range of 1 kHz to 100 kHz.

5. Active EMI reduction device (12) according to claim 1, alternative a), or any of the claims 2 to 3, dependent from claim 1, alternative a), or according to claim 4, wherein the EMI reduction generator (18)
5.1 is configured to generate the EMI reduction signal (18) in form of a bitstream; and/or
5.2 comprises a Digital-Analog-Converter (52) configured to convert a digital EMI reduction signal (18) supplied by a processing unit (50) into an analogue EMI reduction signal (44); and/or
5.3 comprises an analogue amplification unit (38) configured to adapt the analogue EMI reduction signal (44) for use to drive the first and/or second power semiconductors; and/or
5.4 comprises an analogue amplifier unit (54) chosen from the group consisting of an operational amplifier and a bipolar amplifier; and/or
5.5 comprises a passive filter circuit (56).

6. Active EMI noise reduction device (12) according to claim 1, alternative b), or any of the claims 2 to 3, dependent from claim 1, alternative b),
wherein the EMI reduction generator (18)
6.1 is configured to supply the EMI reduction signal (20) as a PWM signal; and/or.
6.2 comprises a driver (58) configured to receive the digital EMI reduction signal (20) and to adapt it for directly driving the first and second GaN power semiconductors (46).

7. Active EMI noise reduction device (12) according to any of the preceding claims, wherein the injector circuit (26) comprises a current injector.

8. Power electronic system (10), especially for an aircraft (100), comprising an active EMI noise reduction device (12) according to any of the preceding claims.

9. Aircraft (100) comprising a power electronic system (10) according to claim 8 and/or an active EMI reduction device (12) according to any of the claims 1 to 7.

10. Method for active EMI reduction in a power electronic system (10), especially of an aircraft (100), the method comprising the steps:
I) sensing EMI noise and outputting an EMI noise signal (16),
II) generating an EMI reduction signal (20) by inverting the EMI noise signal (16),
III) amplifying the EMI reduction signal (20) and
IV) injecting the amplified EMI reduction signal (20) in the power electronic system (10),
wherein step III) is conducted by means of a half bridge with a first power semiconductor and a second power semiconductor which are driven by the EMI reduction signal (20),
a) wherein the first and second power semiconductors are operated in a linear operation mode, wherein step II) comprises generating an analogue EMI reduction signal (44) for driving the first and second power semiconductors, or
b) wherein, as the first and second power semiconductors, GaN semiconductors (46) are used, wherein step II) comprises generating a digital EMI reduction signal (20) for driving the first and second GaN semiconductors (46).

11. Method according to claim 10, wherein
step I) comprises sensing a current and determining Common Mode noise or Differential Mode noise and/or
step IV) comprises current injection.

12. Method according to any of the claims 10 or 11, wherein in alternative a),
12.1 for the first and second power semiconductors, power semiconductors from the group consisting of MOSFETs, bipolar transistors, Si-transistors, Si-MOSFETs (42), power Si-MOSFETs, power SiC-MOSFETs, SiC power devices, SiC power transistors are used; and/or
12.2 the first and second power semiconductors are operated in a linear mode wherein the analogue EMI reduction signal is amplified proportionally or by an amplification factor.
